# EUROPÄISCHE PATENTSCHRIFT

(11) **EP 1 195 354 B1**
(45) Veröffentlichungstag und Bekanntmachung des Hinweises auf die Patenterteilung: **28.12.2005**
(21) Anmeldenummer: 01122607.3
(22) Anmeldetag: 26.09.2001
(51) Int. Cl.: C01B 7/19

(54) **Verfahren zur Abtrennung von Arsenverbindungen aus dem Destillationssumpf der Fluorwasserstoffherstellung**
Process for the separation of arsenic compounds from the distillation bottoms fraction of the hydrogen fluoride production
Procédé de séparation des composés arséniques de la queue de distillation lors de la préparation de fluorure d'hydrogène

(30) Priorität: 09.10.2000 DE 10049805
(43) Veröffentlichungstag der Anmeldung: 10.04.2002
(73) Patentinhaber: LANXESS Deutschland GmbH, 51369 Leverkusen (DE)
(72) Erfinder: Peters, Axel, 51373 Leverkusen (DE); Lailach, Günter, Dr., 47799 Krefeld (DE); Klipper, Reinhold, Dr., 50933 Köln (DE)

(56) Entgegenhaltungen:
- EP-B- 0 660 803
- DE-A- 3 926 586
- DE-A- 3 941 989
- US-A- 5 089 241

## Beschreibung

Die Erfindung betrifft ein neues Verfahren zum Abtrennen von Arsen-(V)-Verbindungen aus dem Destillationssumpf bei der destillativen Reinigung von Fluorwasserstoff mittels Amino-/Ammonium-funktionalisierter Anionenaustauscher.

Die Reinigung von Fluorwasserstoff wird üblicherweise so durchgeführt, dass das im Fluorwasserstoff vorliegende Arsen der Oxidationsstufe (III) durch ein Oxidationsmittel oxidiert wird. Die Oxidation kann während oder vorzugsweise vor der Destillation erfolgen. Hierdurch wird das Arsen in eine schwerflüchtige Arsen-(V)-Verbindung überführt, von der Fluorwasserstoff durch Destillation abgetrennt werden kann. Durch die anschließende Destillation wird als Kopfprodukt arsenarmer Fluorwasserstoff und als Sumpfprodukt ein arsenreiches Gemisch erhalten, das außer den Arsen-(V)-Verbindungen noch Wasser, Schwefelsäure und Fluorwasserstoff enthält. Die Arsen-(V)-Verbindungen liegen im Destillationssumpf als Hexafluoroarsenat-Ionen vor.

Gemäß dem Stand der Technik kann die Aufarbeitung des Sumpfproduktes dadurch erfolgen, dass das Hexafluoroarsenat-Ion unter verschiedenen Bedingungen in schwerlösliches Calciumarsenat überführt wird (vgl. z.B. EP-A 660 803 und US-A 5 089 241).

Die im Stand der Technik beschriebenen Verfahren sind jedoch aufwendig und führen zu einem Produkt (Ca(AsO₃)₂), das die in Deutschland zulässigen Eluatgrenzwerte für Deponien um das 60-fache überschreitet und somit in Sonderdeponien gelagert werden muß.

Gemäß dem Stand der Technik können stark basische Amino- und/oder Ammonium-funktionalisierte Anionenaustauscher zur Entfernung von Arsen-Fluoridkomplexen von Abwässern der Glasindustrie verwendet werden (vgl. z.B. DE 39 41 989 A und DE 39 26 586 A).

Aufgabe der vorliegenden Erfindung war es daher, Arsen-(V)-Verbindungen, insbesondere Hexafluoroarsenat-Verbindungen, unter wirtschaftlichen Bedingungen aus dem Destillationssumpf der Fluorwasserstoffherstellung abzutrennen und in eine deponiefähige Form zu überführen. Überraschenderweise wurde nun gefunden, dass Amino-/Ammonium-funktionalisierte Anionenaustauscher in der Lage sind, das AsF₆-Ion aus sauren wässrigen Lösungen mit hoher Selektivität zu adsorbieren.

Gegenstand der vorliegenden Erfindung ist ein Verfahren zur Abtrennung von Arsenverbindungen der Oxidationsstufe V, insbesondere von Hexafluoroarsenat-Verbindungen, aus dem bei der destillativen Reinigung von Fluorwasserstoff anfallenden Destillationssumpf, dadurch gekennzeichnet, dass der Destillationssumpf mit mindestens einem Amino- und/oder Ammonium-funktionalisierten Anionenaustauscher in Kontakt gebracht wird.

Für die Durchführung des erfindungsgemäßen Verfahrens ist es bevorzugt, zunächst die Arsenverbindungen der Oxidationsstufe V durch Behandeln des Arsen(III)-haltigen Fluorwasserstoffs mit einem Oxidationsmittel zu erzeugen. Aus dem Stand der Technik sind eine Vielzahl hierzu geeigneter Oxidationsmittel bekannt, z.B.: Chrom-IV-oxid, elementares Chlor, elementares Fluor, elementares Fluor in Gegenwart von Alkalimetallfluoriden, Kaliumpermanganat, Chlorate und Peroxide, Halogenfluoride, Wasserstoffperoxid in Gegenwart eines Katalysators, elektrochemische Oxidation, Sauerstoffdifluorid. Bevorzugt ist jedoch die Oxidation mit einem Oxidationsmittel aus der Reihe Fluor, Chlor, Halogenfluoride, Sauerstoffdifluorid, Wasserstoffperoxid oder durch elektrochemische Oxidation. Die Menge an Oxidationsmittel ist dabei so zu bemessen, dass eine möglichst vollständige Umsetzung der Arsen(III)-Verbindungen zu Hexafluoroarsenat-Verbindungen gewährleistet ist.

Die anschließende Destillation von Fluorwasserstoff kann z.B. bei Normaldruck oder unter einem Druck von 0,5 bis 2 bar (abs.) erfolgen. Es wird so lange Fluorwasserstoff verdampft, bis ein AsF₆-haltiges Sumpfprodukt mit maximal 90 Gew.-%, vorzugsweise maximal 75 Gew.-%, besonders bevorzugt maximal 60 Gew.-% HF erhalten wird. Bevorzugt wird die Destillation in zwei Verfahrensstufen durchgeführt, wobei in der ersten Stufe vorzugsweise in einer Kolonne aus C-Stahl bei Sumpftemperaturen unter 30°C und bei einem Druck von vorzugsweise 0,9 bis 1 bar (abs.) ein Sumpfprodukt mit mindestens 95 Gew.-% HF, besonders bevorzugt mindestens 98 Gew.-% HF abgezogen wird. Das Wasser, Sulfat- und Hexafluoroarsenat-Ionen enthaltende Sumpfprodukt wird dann in einer zweiten Stufe, vorzugsweise in einem durch Kunststoffauskleidung korrosionsgeschütztem Verdampfer, so lange eingedampft, bevorzugt bei einem Druck von 0,9 bis 1 bar (abs.), bis der HF-Gehalt maximal 90 Gew.-%, vorzugsweise maximal 75 Gew.-% und besonders bevorzugt maximal 60 Gew.-% beträgt.

Erfindungsgemäß wird das als Destillationssumpf anfallende, AsF₆-Ionen enthaltende Gemisch, vorzugsweise nach dem Mischen mit der 10- bis 100-fachen Menge Wasser, mit mindestens einem Amino- und/oder Ammonium-funktionalisierten Anionenaustauscher in Kontakt gebracht. Für das erfindungsgemäße Verfahren eignen sich Anionenaustauscher mit quartären Ammoniumgruppen und/oder primären und/oder tertiären Aminogruppen sowohl einzeln als auch in beliebigem Gemisch untereinander. Es hat sich gezeigt, dass Anionenaustauscher mit primären und/oder tertiären Aminogruppen das AsF₆-Ion aus sauren wässrigen Lösungen mit hoher Selektivität adsorbieren. Anionenaustauscher mit quartären Ammoniumgruppen adsorbieren AsF₆-Ionen auch aus neutralisierten Gemischen mit vergleichbarer Austauschkapazität wie aus sauren Gemischen. Besonders bevorzugt für das erfindungsgemäße Verfahren sind Anionenaustauscher mit tertiären Aminogruppen im Hinblick auf deren Selektivität.

Vorzugsweise werden somit die AsF₆-Ionen aus sauren oder neutralisierten wässrigen Systemen erfindungsgemäß mittels Anionaustauschern entfernt, die quartäre Ammoniumgruppen enthalten oder aus sauren wässrigen Systemen mit Anionenaustauscher, die tertiäre und/oder primäre Aminogruppen enthalten. Geeignet zur Ausführung des erfindungsgemäßen Verfahrens sind sowohl heterodisperse als auch monodisperse Anionenaustauscher, bevorzugt ist jedoch der Einsatz monodisperser Anionenaustauscher.

Um sowohl minimale Arsengehalte in der entarsenierten Flüssigkeit als auch maximale Arsenbeladung der Anionenaustauscher zu erreichen, werden bevorzugt in bekannter Weise mehrere Anionenaustauscher mit abnehmender AsF₆-Beladung nacheinander mit der zu entarsenierenden Mischung in Kontakt gebracht.

Die für die erfindungsgemäße Verwendung einzusetzenden Anionenaustauscher liegen bevorzugt als Perlpolymerisate in heterodisperser oder monodisperser Form vor.

Sie bestehen aus vernetzten Polymerisaten ethylenisch einfach ungesättigter Monomerer, die zum überwiegenden Teil aus mindestens einer Verbindung der Reihe Styrol, Vinyltoluol, Ethylstyrol, α-Methylstyrol oder deren kernhalogenierte Derivate wie Chlorstyrol bestehen; sie können daneben auch eine oder mehrere Verbindungen aus der Reihe Vinylbenzylchlorid, Acrylsäure, ihre Salze oder ihre Ester, insbesondere ihren Methylester, ferner Vinylnaphthaline, Vinylxylole oder die Nitrile oder Amide von Acryl- oder Methacrylsäuren enthalten. Bevorzugt sind Polymerisate aus Styrol-Divinylbenzol oder Polyacrylat in hetero- oder vorzugsweise monodisperser Form.

Die in der vorliegenden Anmeldung zu verwendenden monodispersen Anionenaustauscher sind z.B. in der DE-A 19 954 393 beschrieben, deren Inhalt von der vorliegenden Anmeldung umfaßt wird.

Heterodisperse Ionenaustauscher können durch Funktionalisieren von heterodispersen Perlpolymerisaten erhalten werden. Die Herstellung heterodisperser Perlpolymerisate in Suspensionspolymerisationen ist wohlbekannt - siehe z.B. Ullmann's Encyclopedia of Industrial Chemistry, Vol. A 14, Seite 396.

Beispiele für erfindungsgemäß einzusetzende heterodisperse Anionenaustauscher finden sich auch in US-A 3 716 482 oder US-A 3 637 535, deren Inhalt wiederum von dieser Anmeldung mit umfaßt ist.

Die bevorzugt einzusetzenden monodispersen Anionenaustauscher weisen die funktionellen Gruppen der Formeln (1) und/oder (2) auf, 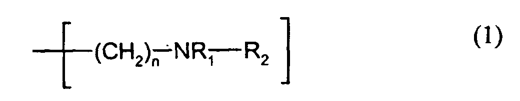 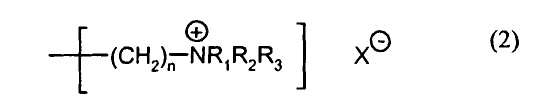 worin
- R₁: für Wasserstoff, eine Alkylgruppe, eine Hydroxyalkylgruppe oder eine Alkoxyalkylgruppe steht,
- R₂: für Wasserstoff, eine Alkylgruppe, eine Alkoxygruppe oder eine Hydroxyalkylgruppe steht,
- R₃: für Wasserstoff, eine Alkylgruppe, eine Alkoxyalkylgruppe oder eine Hydroxyalkylgruppe steht,
- n: für eine Zahl von 1 bis 5, besonders bevorzugt für 1 steht und
- X: für ein anionisches Gegenion, bevorzugt für Cl^{⊖}, Br^{⊖}, OH^{⊖}, NO₃^{⊖} oder SO₄²⁻ steht.

In den Resten R₁, R₂ und R₃ steht Alkoxy bzw. Alkyl jeweils bevorzugt für 1 bis 6 Kohlenstoffatome.

In den erfindungsgemäßen Anionenaustauschern trägt jeder aromatische Kern bevorzugt 0,1 bis 2 der obengenannten funktionellen Gruppen (1), (2).

Als monodispers werden in der vorliegenden Anmeldung solche Stoffe bezeichnet, bei denen mindestens 90 Volumen- oder Massen-% der Teilchen einen Durchmesser besitzen, der in dem Intervall mit der Breite von ± 10 % des häufigsten Durchmessers um den häufigsten Durchmesser herum liegt. Beispielsweise liegen dann bei einem Perlpolymerisat, dessen Kügelchen einen häufigsten Durchmesser von 0,50 mm aufweisen, mindestens 90 Volumen- oder Massen-% in einem Größenintervall zwischen 0,45 mm und 0,55 mm, oder bei einem Perlpolymerisat, dessen Kügelchen einen häufigsten Durchmesser von 0,70 mm aufweisen mindestens 90 Volumen- oder Massen-% in einem Größenintervall zwischen 0,77 mm und 0,63 mm.

Davon abweichende Perlpolymerisate werden gemäß der vorliegenden Anmeldung als heterodispers bezeichnet.

Die Ionenaustauscher können als mikroporöse oder gelförmige bzw. makroporöse Perlpolymerisate vorliegen.

Die Begriffe mikroporös oder gelförmig bzw. makroporös sind aus der Fachliteratur bekannt, beispielsweise aus Adv. Polymer Sci., Vol. 5, Seiten 113 - 213 (1967).

Makroporöse Perlpolymerisate haben Porendurchmesser von ca. 50 Angström und größer.

Ohne Porogene erhält man Ionenaustauscher mit mikroporöser oder gelförmiger Struktur.

Als Amine zur Einführung der funktionellen Gruppen werden bevorzugt Trimethylamin, Dimethylaminoethanol, Triethylamin, Tripropylamin, Tributylamin, Ammoniak, Urotropin, Aminodiessigsäure eingesetzt. Hierbei entstehen Anionenaustauscher mit quartären Ammoniumgruppen oder primären oder sekundären Aminogruppen beispielsweise Aminomethylgruppen, Dimethylaminomethylgruppen, Trimethylaminomethylgruppen, Dimethylaminoethylhydroxyethylgruppen, Iminodiessigsäuregruppen, Thioharnstoffgruppen oder Aminomethylphosphonsäuregruppen.

Perlpolymerisate mit Aminomethylgruppen können mit Chloressigsäure zu Ionenaustauschern mit Iminodiessigsäuregruppen oder mit Formalin/Phosphor(3)verbindungen zu Ionenaustauschern mit Aminomethylphosphonsäuregruppen umgesetzt werden.

Zur Entfernung der arsenhaltigen Anionen können aber auch makroporöse oder gelförmige Anionenaustauscher auf Acrylesterbasis eingesetzt werden.

Die praktischen Arbeiten zur vorliegenden Erfindung haben gezeigt, dass für die Adsorption aus neutralen oder schwach-alkalischen, wässrigen Lösungen bevorzugt Anionenaustauscher geeignet sind, die quartäre Ammoniumgruppen enthalten. Für die Adsorption aus sauren Lösungen sind sowohl Ionenaustauscher mit quartären Ammoniumgruppen als auch solche mit tertiären oder primären Aminogruppen oder Gemischen derselben geeignet. Im Hinblick auf die Selektivität der AsF₆^{⊖}-Adsorption werden Anionenaustauscher mit tertiären Aminogruppen bevorzugt.

Besonders bevorzugt werden monodisperse Austauscherharze wegen der günstigen hydrodynamischen Eigenschaften, die bei stark verdünnten Lösungen besonders zur Wirkung kommen. Aufgrund der Adsorption von AsF₆^{⊖}-Ionen empfiehlt sich die Umsetzung aller zu adsorbierenden Arsen-Ionen in den Adsorptionsmedien zur Hexafluorarsensäure oder Verbindungen derselben, bevorzugt der Salze der Hexafluorarsensäure, besonders bevorzugt zum Natrium- oder Kaliumsalz der Hexafluorarsensäure, die besonders bevorzugt an den erfindungsgemäß zu verwendenden Ionenaustauschern adsorbiert werden.

Der AsF₆-gesättigte Anionenaustauscher kann entweder in einer geeigneten Gefahrstoffdeponie abgelagert oder in einer Verbrennungsanlage verbrannt werden, die mit Einrichtungen zur Arsenabtrennung ausgerüstet ist.

Das erfindungsgemäße Verfahren soll durch die Beispiele verdeutlicht werden, ohne dass dadurch der Umfang der Erfindung eingeschränkt wird.

### Beispiel 1

Fluorwasserstoff mit 37 ppm AsF₃, 34 ppm H₂SO₄ und ca. 110 ppm H₂O wurde mit einer Mischung von 10 Vol.-% F₂ in N₂ kontaktiert, um AsF₃ zu HAsF₆ umzusetzen. Anschließend wurde in einer Kolonne aus ferritischen Stahl bei einer Sumpftemperatur von 25°C destilliert. Der über Kopf abgezogene und kondensierte Fluorwasserstoff enthielt weniger als 50 ppb As, weniger als 1 ppm H₂SO₄ und weniger als 30 ppm H₂O.

In einem aus korrosionsbeständigen Werkstoffen gefertigten Verdampfer wurde HF aus dem Sumpfprodukt verdampft. Bei Erreichen verschiedener Siedetemperaturen im Bereich von 38 bis 80°C wurden Proben entnommen, analysiert und zur Abtrennung des Arsens mittels Ionenaustauscher verwendet.

| Probe | Zusammensetzung in Gew.-% | | | |
|---|---|---|---|---|
| | HAsF₆ | H₂SO₄ | H₂O | HF |
| A | 3,33 | 2,13 | 6,9 | 87,6 |
| B | 5,74 | 3,68 | 11,9 | 78,7 |
| C | 12,90 | 8,35 | 26,8 | 52,0 |

Die Proben wurden für die Adsorptionsversuche 1:100 mit Wasser verdünnt. Als Anionenaustauscher wurden verschiedene Lewatit® -Harze verwendet, die sich bezüglich der aktiven Gruppen, der Körnung und der totalen Austauschkapazität (TK) unterscheiden:

| Lfd. Nr. | Typ Levatit® | Körnung | Anionenaustauscher auf Basis Styrol-Divinylbenzol | TK (Val/1) |
|---|---|---|---|---|
| I | MP600WS | heterodispers | mit Dimethylhydroxyethyl-ammonium-Gruppen | 1,4 |
| II | MP62WS | heterodispers | mit Dimethylamino-Gruppen | 1,85 |
| III | MP64ZII | heterodispers | mit Aminomethyl-Gruppen | 2,28 |
| IV | VPOC1094 | monodispers | mit 25 % Trimethylamino-und 75 % Dimethylamino-Gruppen | 1,79 |

Der Ionenaustauscher wurde jeweils in der verdünnten Lösung suspensiert. Nach 2 Stunden wurde eine Probe analysiert und die Sättigung des Ionenaustauschers mit AsF₆-Ionen berechnet.

Die Ergebnisse sind in der Tabelle aufgelistet:

| Versuchs-Nr. | Probe | Ionenaustauscher | Restgehalt in Lösung ppm As | Sättigung % von TK |
|---|---|---|---|---|
| 1.1 | A | IV | 250 | 38 |
| 1.2 | B | IV | 96 | 88 |
| 1.3 | C | IV | 60 | 94 |
| 1.4 | C | III | 80 | 47 |
| 1.5 | C | II | 18 | 53 |
| 1.6 | C | I | 68 | 57 |
| 1.7 | C | I | 3 | 37 |

### Beispiel 2

Probe C aus Beispiel 1 wurde mit NaOH neutralisiert und Ionenaustauscher I (Lewatit® MP600WS) darin suspendiert. Bei einem Restgehalt von 76 ppm As in der Lösung wurde für den Ionenaustauscher ein Sättigungsgrad von 53 % berechnet.

### Beispiel 3

Die aus Versuch 1.3, Beispiel 1 erhaltene Lösung wurde mit soviel Ionenaustauscher IV (Lewatit® VPOC1094) versetzt, dass maximal eine Sättigung durch AsF₆-Ionen von 10 % der TK erreicht werden konnte. Der As-Gehalt der Lösung lag nach 2-stündigem Kontakt mit dem Ionenaustauscher unter 50 ppb As.

## Patentansprüche

1. Verfahren zur Abtrennung von Arsenverbindungen der Oxidationsstufe V aus dem bei der destillativen Reinigung von Fluorwasserstoff anfallenden Destillationssumpf, **dadurch gekennzeichnet, dass** der Destillationssumpf mit mindestens einem Amino-und/oder Ammonium-funktionalisierten Anionenaustauscher in Kontakt gebracht wird.

2. Verfahren gemäß Anspruch 1, **dadurch gekennzeichnet, dass** es sich bei den Arsenverbindungen der Oxidationsstufe V um Hexafluoroarsenat-Verbindungen handelt.

3. Verfahren gemäß Ansprüchen 1 und 2, **dadurch gekennzeichnet, dass** der Destillationssumpf bei der Reinigung von Fluorwasserstoff anfällt, indem zunächst Arsen (III)-haltiger Fluorwasserstoff mit einem Oxidationsmittel behandelt wird und anschließend so lange Fluorrwasserstoff abdestilliert wird, bis ein Sumpfprodukt entsteht, das maximal 90 Gew.% HF enthält.

4. Verfahren gemäß Anspruch 3, **dadurch gekennzeichnet, dass** die Destillation des Fluorwasserstoffs in zwei Verfahrensstufen durchgeführt, wobei in der ersten Stufe bei Sumpftemperaturen unter 30°C ein Sumpfprodukt mit mindestens 95 Gew.-% HF abgezogen wird und das Sumpfprodukt dann in einer zweiten Stufe in einem durch Kunststoffauskleidung korrosionsgeschützten Verdampfer, so lange eingedampft wird, bis der HF-Gehalt maximal 90 Gew.-% beträgt.

5. Verfahren gemäß Ansprüchen 1 bis 3, **dadurch gekennzeichnet, dass** der Destillationssumpf, bevor er mit dem Anionenaustauscher in Kontakt gebracht wird, mit der 10- bis 100-fachen Menge Wasser, bezogen auf das Volumen, verdünnt wird.

6. Verfahren gemäß Ansprüchen 1 bis 3 und 5, **dadurch gekennzeichnet, dass** es sich bei dem Anionenaustauscher um einen solchen mit quatären Ammoniumgruppen und/oder primären und/oder tertiären Aminogruppen oder deren Gemische untereinander handelt.

7. Verfahren gemäß Ansprüchen 1 bis 3, 5 und 6, **dadurch gekennzeichnet, dass** ein Anionenaustauscher mit tertiären Aminogruppen eingesetzt wird.

8. Verfahren gemäß Ansprüchen 1 bis 3, 5, 6 und 7, **dadurch gekennzeichnet, dass** es sich bei den Anionenaustauschern um homo- oder heterodisperse Anionenaustauscher auf Basis von vernetzten Polymerisaten aus Styrol-Divinylbenzol oder Polyacrylat handelt.

## Claims

1. Process for removing arsenic compounds in the oxidation state V from the distillation bottoms obtained in the purification of hydrogen fluoride by distillation, **characterized in that** the distillation bottoms are brought into contact with at least one amino- and/or ammonium-functionalized anion exchanger.

2. Process according to Claim 1, **characterized in that** the arsenic compounds in the oxidation state V are hexafluoroarsenate compounds.

3. Process according to Claim 1 or 2, **characterized in that** the distillation bottoms are obtained in the purification of hydrogen fluoride by firstly treating arsenic(III)-containing hydrogen fluoride with an oxidant and subsequently distilling off hydrogen fluoride until a bottom product containing not more than 90% by weight of HF is obtained.

4. Process according to Claim 3, **characterized in that** the distillation of the hydrogen fluoride is carried out in two process stages, with a bottom product containing at least 95% by weight of HF being taken off at temperatures at the bottom of less than 30°C in the first stage and the bottom product then being evaporated in an evaporator protected against corrosion by plastic lining in a second stage until the HF content is not more than 90% by weight.

5. Process according to Claims 1 to 3, **characterized in that** the distillation bottoms are diluted with from 10 to 100 times their volume of water before they are brought into contact with the anion exchanger.

6. Process according to Claims 1 to 3 and 5, **characterized in that** the anion exchanger contains quaternary ammonium groups and/or primary and/or tertiary amino groups or mixtures thereof.

7. Process according to Claims 1 to 3, 5 and 6, **characterized in that** an anion exchanger containing tertiary amino groups is used.

8. Process according to Claims 1 to 3, 5, 6 and 7, **characterized in that** the anion exchangers are homodisperse or heterodisperse anion exchangers based on crosslinked polymers of styrene-divinylbenzene or polyacrylate.

## Revendications

1. Procédé pour la séparation de composés contenant de l'arsenic au degré d'oxydation v d'avec le résidu de distillation produit lors de la purification par distillation de l'acide fluorhydrique, **caractérisé en ce que** le résidu de distillation est mis en contact avec au moins un échangeur d'anions muni d'une fonctionnalité amino et/ou ammonium.

2. Procédé selon la revendication 1, **caractérisé en ce que** les composés contenant de l'arsenic au degré d'oxydation V consistent en composés hexafluoroarsénate.

3. Procédé selon les revendications 1 et 2, **caractérisé en ce que** le résidu de distillation est produit lors de la purification d'acide fluorhydrique d'abord par traitement d'acide fluorhydrique contenant de l'arsenic-(III) par un oxydant et ensuite séparation par distillation de l'acide fluorhydrique jusqu'à la formation d'un produit de fond qui contient au maximum 90 % en poids de HF.

4. Procédé selon la revendication 3, **caractérisé en ce que** la distillation de l'acide fluorhydrique est effectuée en deux étapes de processus, dans la première étape un produit de fond comportant au moins 95 % en poids de HF étant évacué à des températures de pied de colonne inférieures à 30°C et dans une seconde étape le produit de fond étant ensuite évaporé dans un vaporiseur protégé contre la corrosion par un revêtement en matière plastique, jusqu'à ce que la teneur en HF soit au maximum de 90 % en poids.

5. Procédé selon les revendications 1 à 3, **caractérisé en ce que** le résidu de distillation, avant d'être mis en contact avec l'échangeur d'anions, est dilué avec 10 à 100 fois la quantité d'eau, en volume.

6. Procédé selon les revendications 1 à 3 et 5, **caractérisé en ce que** l'échangeur d'anions consiste en un tel échangeur à groupes ammonium quaternaire et/ou groupes amino primaires et/ou tertiaires ou mélanges de ceux-ci entre eux.

7. Procédé selon les revendications 1 à 3, 5 et 6, **caractérisé en ce qu'**on utilise un échangeur d'anions à groupes amino tertiaires.

8. Procédé selon les revendications 1 à 3, 5, 6 et 7, **caractérisé en ce que** les échangeurs d'anions consistent en échangeurs d'anions homo- ou hétérodispersés à base de polymères réticulés de styrène-divinylbenzène ou polyacrylate.
